# FASCICULE DE BREVET EUROPEEN

(11) **EP 0 868 773 B1**
(45) Date de publication et mention de la délivrance du brevet: **30.08.2000**
(21) Numéro de dépôt: 96939970.8
(22) Date de dépôt: 22.11.1996
(51) Int. Cl.: H02K 41/02

(54) **DISPOSITIF D'ACCROCHAGE PERMETTANT D'ASSURER LE MONTAGE ET/OU LE DEMONTAGE DU BLOC PRIMAIRE DE BOBINAGE D'UN MOTEUR LINEAIRE SUR UN ORGANE MOBILE**
BEFESTIGUNGSVORRICHTUNG ZUR MONTAGE UND/ODER DEMONTAGE DES PRIMÄRWICKLUNGBLOCKS EINES LINEARMOTORES AUF EINEM BEWEGLICHEN GLIED
ATTACHMENT DEVICE FOR MOUNTING AND/OR REMOVING A PRIMARY COIL BLOCK OF A LINEAR MOTOR ON A MOVABLE MEMBER

(30) Priorité: 19.12.1995 FR 9515115
(43) Date de publication de la demande: 07.10.1998
(73) Titulaire: Renault Automation Comau, 92365 Meudon La Forêt Cedex (FR)
(72) Inventeur: AZEMA, André, F-81710 Saix (FR)
(74) Mandataire: Richebourg, Michel François
(86) Numéro de dépôt international: FR9601855
(87) Numéro de publication internationale: WO9723029

(56) Documents cités:
- US-A- 5 302 873

## Description

La présente invention a trait aux moteurs linéaires du type de ceux comportant un alignement de bobinages sous tension alternative, créant, dans un conducteur placé entre les pôles, un champ électromagnétique variable, donc des courants induits dans ce conducteur dit bloc secondaire, de sorte que la force de réaction électromagnétique créée tend à déplacer le bloc de bobinages.

Les moteurs de ce type appelés également moteurs axiaux, ont un grand avantage dans la mesure où ils n'exigent aucune conversion de mouvement tournant en mouvement longitudinal et où l'inversion du courant dans le bobinage du bloc primaire permet d'assurer le freinage du bloc mobile. Ces moteurs sont utilisés pour des déplacements à grande vitesse des organes mobiles de machines dans le domaine de la bureautique ou encore pour des véhicules à grande vitesse telle par exemple, l'installation minière de transport à entraînement par moteur linéaire proposée dans le brevet français n°2.07.767, laquelle installation comporte un stator alimenté électriquement le long d'un circuit sur lequel sont guidés, avec un espacement prédéterminé entre eux, des châssis de transport .

Ces moteurs linéaires offrent de nombreux avantages et parmi ceux-ci :
- une faible inertie due à l'absence d'organes de renvoi (engrenages) et d'entraînement (courroies),
- une rapidité de déplacement (pas de conversion de mouvement),
- aucune usure par l'absence de frottements entre les blocs primaire et secondaire,
- un silence de fonctionnement,
- etc...

Si les résultats théoriques établis pour un tel moteur sont intéressants, ce dernier ne fait l'objet actuellement d'aucune exploitation dans le domaine des machines-outils où les organes mobiles sont généralement actionnés dans leur mouvement longitudinal par des moteurs électriques rotatifs coopérant avec des courroies et des engrenages pour convertir les mouvements tournants en mouvements linéaires. Ce que constatant, la demanderesse a mené des recherches ayant pour objet l'étude d'une machine-outil à grande vitesse qui utilise des concepts classiques de mécanique dans sa réalisation, avec des critères spécifiques d'adaptation à l'installation de moteurs linéaires aux lieu et place des moteurs rotatifs, pour pallier les inconvénients de ces derniers tout en conciliant les avantages des moteurs linéaires, quand ils existent pour ce genre d'application. De ce fait, la présente invention comporte des caractéristiques originales qui constituent un principe de conception d'une telle machine dont il résulte des avantages nouveaux parmi lesquels l'adéquation de la machine à sa destination particulière par un mode d'installation préférée de moteurs linéaires pour actionner les mouvements longitudinaux de ses organes mobiles. A ce sujet, il a été constaté que les manipulations de montage et de démontage du bloc primaire de bobinage des moteurs linéaires conformés pour répondre à ce type d'installation posent de sérieux problèmes en raison de l'attraction magnétique du bloc secondaire qu'il subit du fait du champ magnétique élevé engendré pour assumer les puissances demandées.

Pour détourner ce genre de difficulté, la demanderesse a donc imaginé un dispositif qui permette d'accrocher le bloc primaire de bobinage d'un moteur linéaire à l'organe mobile d'une machine-outil, et ce par l'intermédiaire d'éléments pouvant être bloqués entre eux sans que soit mise en cause leur résistance et tout en veillant à ce que les opérations de montage et de démontage soient exécutées dans de bonnes conditions.

Pour ce faire, le dispositif d'accrochage de l'invention utilise un premier élément d'accrochage et un second élément d'accrochage implantés sur l'une de leurs faces, l'un sur le bloc primaire de bobinage du moteur linéaire et l'autre sur l'organe mobile de la machine recevant normalement ce bloc primaire, en vis-à-vis de l'aimant du bloc secondaire. Sur l'autre de leurs faces restée libre, le premier élément d'accrochage porte une partie mâle et le second élément d'accrochage porte une partie femelle en correspondance avec la partie mâle. Cette partie mâle vient s'encastrer dans cette partie femelle selon un axe d'assemblage longitudinal de glissement afin de réaliser l'accrochage du premier et du second élément. L'axe d'assemblage est en principe perpendiculaire à l'axe d'attraction magnétique engendrée entre les deux blocs primaire et secondaire de telle sorte que la partie mâle engagée dans la partie femelle s'oppose à la dissociation du premier et du deuxième élément d'accrochage.

Selon un mode de réalisation préférée de l'invention, la partie mâle du susdit premier élément d'accrochage est constituée par une glissière apte à coulisser dans une coulisse constituant la partie femelle du susdit deuxième élément d'accrochage. Cette glissière forme donc saillie sur la face du premier élément tandis que la coulisse ouvre un creux sur la face en vis-à-vis de la saillie du deuxième élément de telle sorte que lorsque ces deux faces sont engagées l'une dans l'autre par glissement, elles réalisent l'accrochage par encastrement d'un tenon (glissière) dans une mortaise (coulisse) selon l'axe d'assemblage normal à l'axe d'attraction magnétique des deux blocs. De la sorte, la glissière engagée et retenue dans la coulisse s'oppose à la séparation du premier et du deuxième élément. Cette disposition a pour avantage que l'ensemble des surfaces de contact développées par la partie mâle et par la partie femelle s'opposent à l'ensemble des forces d'attraction magnétique susceptibles de séparer le premier et le deuxième éléments, sauf en ce qui concerne un mouvement s'exerçant selon un sens opposé de l'axe d'assemblage pour démonter l'accrochage. Encore ce dernier mouvement de démontage doit-il être conduit avec détermination dans une opération de démontage, si bien qu'il ne saurait être fortuit.

Selon une forme de réalisation particulièrement avantageuse de l'invention, le susdit premier élément d'accrochage dudit bloc primaire de bobinage est formé par la plaque de refroidissement de ce dernier. Il résulte de cette disposition deux principaux avantages :
- d'abord que le premier moyen d'accrochage du bloc de bobinage primaire ne constitue pas un tiers élément
- et ensuite que la dilatation thermique du bloc primaire de bobinage est rapportée sur la glissière limitant ainsi considérablement les déformations dudit bloc de bobinage.

Selon un mode de réalisation préférée de l'invention, la section de la glissière formant la partie mâle du susdit premier élément d'accrochage adopte un profil en T dimensionné pour évoluer dans le profil en C adopté par la coulisse formant la partie femelle du susdit deuxième élément d'accrochage. Ces profils font offices de guides pour le glissement du premier élément dans le deuxième selon un axe longitudinal d'une part, et de moyens de retenue du premier élément dans le deuxième selon un axe transversal au premier axe pour assurer l'opération d'accrochage proprement dite. En outre, le profil en T de la susdite glissière et le profil en C de la susdite coulisse adoptent avantageusement une pente, soit dans leur épaisseur soit dans leur hauteur, réduisant leurs sections dans le sens de glissement de la glissière dans la coulisse de manière à ce que le coulissement de la première dans la seconde apporte un serrage "conique" des premier et deuxième éléments d'accrochage, assurant un blocage des deux éléments entre eux. En effet, pour autoriser le coulissement de la glissière dans la coulisse, les surfaces de contact des parties mâle et femelle sont séparées par un intervalle dit "jeu" calibré généralement au plus juste, mais que la partie mâle parachève par le serrage "conique" dans la partie femelle, pour constituer un verrouillage dynamique. Ce verrouillage dynamique de l'assemblage du premier élément d'accrochage dans le deuxième élément d'accrochage pourra être complété par un verrouillage statique approprié, par exemple par un moyen de bridage démontable.

Bien que les aspects principaux de l'invention considérés comme nouveaux aient été exprimés ci-dessus, de plus amples détails concernant un mode de réalisation préférée d'une installation d'un moteur linéaire dans une machine-outil respectant les concepts fondamentaux de l'invention, seront mieux compris en se référant à la description ci-après et aux dessins l'accompagnant illustrant ce mode de réalisation.

Sur ces dessins :

La figure 1 représente par une vue en perspective schématique, un moteur linéaire tel qu'installé sur une machine-outil.

La figure 2 est une vue en perspective schématique des deux éléments d'accrochage du dispositif de montage montré sur le dessin de la figure 1.

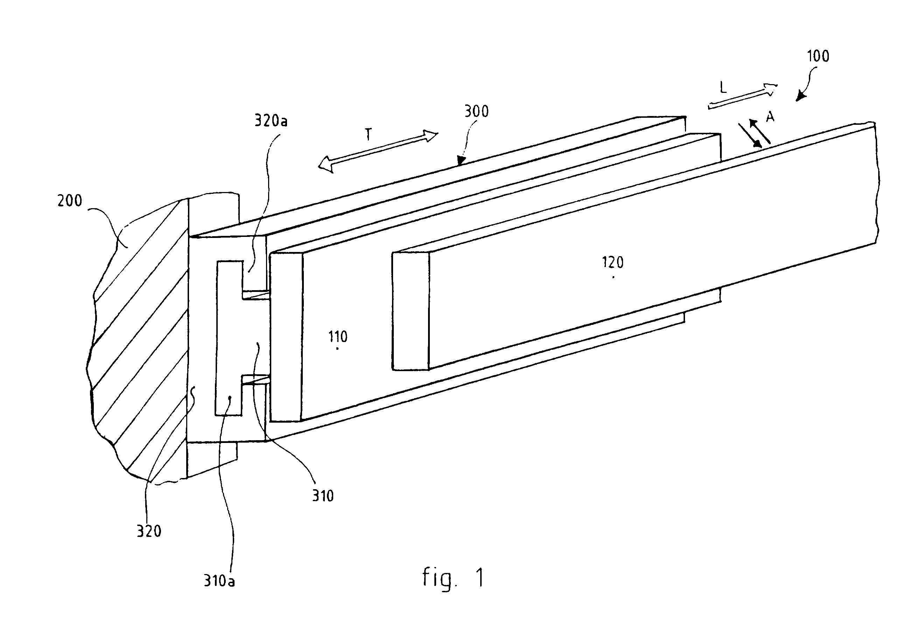

Tel qu'illustré sur le dessin de la figure 1, le moteur linéaire référencé 100 dans son ensemble, comporte un bloc primaire 110 formé classiquement d'un alignement de bobinages et un bloc secondaire 120 formé classiquement d'un aimant permanent de telle sorte que lorsque les bobinages du bloc primaire 110 sont soumis à une tension alternative, un champ électromagnétique variable crée des courants induits dans le bloc secondaire générant une force de réaction électromagnétique ayant pour effet d'actionner les déplacements du bloc primaire 110.

Ce moteur linéaire 100 est destiné dans le cas présent à assumer la cinématique à grande vitesse des mouvements linéaires de certains organes mobiles 200 selon un, deux ou encore trois axes d'une machine-outil non représentée car n'apportant rien de plus à la bonne compréhension de l'invention. A cet effet, le bloc secondaire 120 est associé au bâti fixe de la machine dans une position immuable tandis que le bloc primaire 110 est associé à l'organe mobile 200 guidé selon un mouvement de translation symbolisé par la flèche à double sens T.

Selon le concept fondamental de l'invention, le montage et/ou le démontage du bloc primaire de bobinage 110 sur l'organe mobile 200 est assuré par un dispositif d'accrochage 300 comportant un premier élément d'accrochage 310 et un second élément d'accrochage 320 implantés sur l'une de leurs faces, l'un (310) sur le bloc primaire de bobinage 110 et l'autre sur l'organe mobile 200. Sur l'autre de leurs faces restée libre, le premier élément d'accrochage 310 porte une partie mâle 310a formant glissière et adoptant un profil en T et le second élément d'accrochage 320 porte une partie femelle 320a formant coulisse et adoptant un profil en C dans laquelle la partie mâle en T 310a vient s'encastrer selon un axe d'assemblage longitudinal de glissement (flèche L) afin de réaliser l'accrochage du premier élément 310 au deuxième élément 320 et de leurs parties associées à savoir le bloc primaire 110 et l'organe mobile 200. Comme montré sur le dessin de la figure 1 représentant le moteur linéaire 100 installé, l'axe d'assemblage des deux éléments 310 et 320 (symbolisé par la flèche L) est normal à l'axe d'attraction magnétique (symbolisé par les flèches A) entre les deux blocs primaire 110 et secondaire 120 du moteur 100 de sorte que la partie mâle en T 310a engagée dans la partie femelle en C 320a s'oppose à la dissociation du premier et du deuxième éléments d'accrochage.

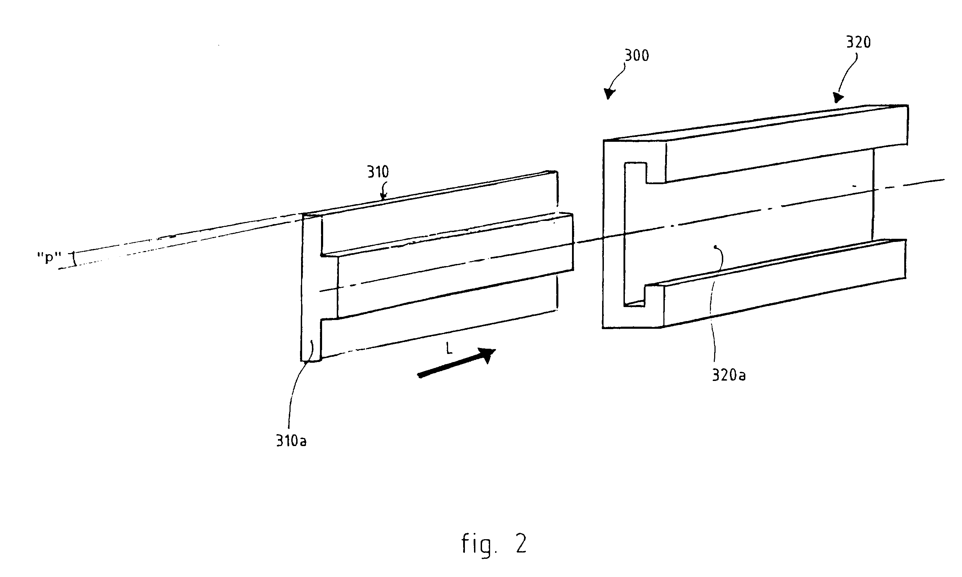

Le dessin de la figure 2 illustre plus en détails un mode de réalisation préférentielle du dispositif d'accrochage 300 permettant de corriger le jeu entre les deux éléments d'accrochage 310 et 320 assemblés. Pour ce faire, le profil en T de la glissière 310a et le profil en C de la coulisse 320a adoptent une pente d'angle "p" réduisant leurs sections dans leur épaissseur et dans le sens de glissement (flèche L) de la glissière 310a dans la coulisse 320a de manière à offrir un serrage "conique" verrouillant l'assemblage des deux parties mâle 310a et femelle 320a. Afin de parfaire ce verrouillage dynamique de l'assemblage du premier élément d'accrochage 310 dans le deuxième élément d'accrochage 320, l'ensemble est verrouillé par un moyen de bridage approprié afin de s'opposer à un décrochage inopiné des deux parties mâle 310a et femelle 320a.

Comme précisé au début du présent mémoire, l'élément d'accrochage 310 du bloc primaire de bobinages 110 est constitué par une plaque de refroidissement de ce dernier, évitant ainsi l'adjonction d'un tiers élément supplémentaire.

On comprend que le dispositif d'accrochage d'un moteur linéaire, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir de la matière revendiquée. Ainsi par exemple, il est possible d'imaginer une tige susceptible d'être assujettie à l'une et/ou à l'autre des extrémités de la glissière 310a afin d'assurer la traction et/ou l'extraction de la glissière 310a dans et/ou hors de la coulisse 320a.

Afin de permettre une meilleure compréhension des dessins, une liste des références avec leurs légendes est ci-après énumérée.

| | |
|---|---|
| 100 | Moteur linéaire |
| 110 | Bloc primaire de bobinage |
| 120 | Bloc secondaire |
| 200 | Organe mobile |
| 300 | Dispositif d'accrochage |
| 310 | Premier élément d'accrochage |
| 310a | Glissière en T de l'élément 310 |
| 320 | Deuxième élément d'accrochage |
| 320a | Coulisse en C de l'élément 320 |
| Flèches A | Forces d'attraction magnétique |
| Flèche L | Mouvement d'encastrement des deux éléments d'accrochage 210 et 220 |
| Flèche T | Mouvement de translation de l'organe mobile 200 |
| "p" | Angle de la pente de la glissière 310a et de la coulisse 320a |

## Revendications

1. Dispositif d'accrochage (300) permettant d'assurer le montage et/ou le démontage d'un moteur linéaire (100) du type de celui dont le bloc primaire de bobinages (110) coopère avec un organe mobile (200) et le bloc secondaire (120) formant aimant coopère avec un organe fixe afin d'actionner les déplacements de translation (flèche T) dudit organe mobile (200) par rapport audit organe fixe, **CARACTERISE PAR LE FAIT QUE** le susdit bloc de bobinage primaire (110) dudit moteur linéaire (100) est associé à un premier élément d'accrochage (310) qui collabore avec un second élément d'accrochage (320) complémentaire au premier et qui, associé à l'organe mobile (200) recevant ledit bloc primaire (110), est préformé pour recevoir par glissement (flèche L) le susdit premier élément d'accrochage (310) et le susdit bloc primaire de bobinages (110) y associé.

2. Dispositif d'accrochage selon la revendication 1, **CARACTERISE PAR LE FAIT QUE** les premier (310) et second (320) éléments d'accrochage sont implantés sur l'une de leurs faces, l'un (310) sur le bloc primaire de bobinages (110) du moteur linéaire (100) et l'autre (320) sur l'organe mobile (200) recevant ce bloc de bobinages et porte sur l'autre de leurs faces restée libre, une partie mâle (310a) pour le premier élément d'accrochage (310) et une partie femelle (320a) pour le second élément d'accrochage (320), de telle sorte que la partie mâle (310a) vienne s'encastrer par glissement (flèche L) dans la partie femelle (320a) selon un axe d'assemblage longitudinal perpendiculaire à l'axe d'attraction magnétique (flèches A) entre les deux blocs primaire (110) et secondaire (120), afin de réaliser l'accrochage du premier (310) au second (320) élément.

3. Dispositif d'accrochage selon les revendications 1 et 2, **CARACTERISE PAR LE FAIT QUE** la partie mâle (310a) du susdit premier élément d'accrochage (310) est constituée par une glissière (310a) apte à coulisser (flèche L) dans une coulisse (320a) constituant la partie femelle du susdit deuxième élément d'accrochage (320).

4. Dispositif d'accrochage selon les revendications 1 et 2, **CARACTERISE PAR LE FAIT QUE** le susdit premier élément d'accrochage (310) est formé par une plaque assurant le refroidissement du susdit bloc primaire de bobinages (110).

5. Dispositif d'accrochage selon les revendications 1, 2 et 3, **CARACTERISE PAR LE FAIT QUE** la section de la glissière (310a) formant la partie mâle du susdit premier élément d'accrochage (310) adopte un profil en T dimensionné pour évoluer dans un profil en C qu'adopte la coulisse formant la partie femelle (320a) du susdit deuxième élément d'accrochage (320).

6. Dispositif d'accrochage selon la revendication 5, **CARACTERISE PAR LE FAIT QUE** le profil en T de la susdite glissière (310a) et le profil ouvert en C de la susdite coulisse (320a) adoptent une pente réduisant leurs sections dans le sens de glissement (flèche L) de la glissière (310a) dans la coulisse (320a) de manière à ce que le glissement de la première dans la seconde autorise un verrouillage dynamique de l'assemblage des deux éléments d'accrochage (310 et 320) par serrage "conique" des parties mâle (310a) et femelle (320a).

7. Dispositif d'accrochage selon la revendication 6, **CARACTERISE PAR LE FAIT QUE** les pentes du profil en T de la susdite glissière (310a) et du profil ouvert en C de la susdite coulisse (320a) sont formées dans le sens de l'épaisseur desdits profils.

8. Dispositif d'accrochage selon la revendication 6, **CARACTERISE PAR LE FAIT QUE** les pentes du profil en T de la susdite glissière (310a) et du profil ouvert en C de la susdite coulisse (320a) sont formées dans le sens de la hauteur desdits profils.

9. Dispositif d'accrochage selon la revendication 6, **CARACTERISE PAR LE FAIT QU'**il comprend une tige susceptible d'être assujettie à l'une et/ou à l'autre des extrémités de la susdite glissière (320a) du premier élément d'accrochage (310) afin d'assurer la traction et/ou l'extraction de la glissière (310a) dans et/ou hors de la coulisse (320a).

10. Dispositif d'accrochage selon lune quelconque des revendications 1 à 9 prises ensemble, **CARACTERISE PAR LE FAIT QUE** l'assemblage du premier élément d'accrochage (310) dans le deuxième élément d'accrochage (320) est verrouillé de manière statique par un moyen de bridage démontable.

## Patentansprüche

1. Befestigungsvorrichtung (300) für die Montage und/oder Demontage eines Linearmotors (100) des Types, bei dem der Primärspulenblock (110) mit einem beweglichen Element (200) und der den Magneten bildende Sekundärblock (120) mit einem festen Element zusammenarbeitet, um die Translationsversetzungen (Pfeil T) des beweglichen Elementes (200) gegenüber dem festen Element zu bewirken, dadurch gekennzeichnet, dass der Primärspulenblock (110) des Linearmotors (100) einem ersten Befestigungselement (310) zugeordnet ist, das mit einem zu dem ersten komplementären zweiten Befestigungselement (320) zusammenarbeitet und das, dem den Primärspulenblock (110) aufnehmenden beweglichen Element (200) zugeordnet, geformt ist, um gleitend (Pfeil L) das erste Befestigungselement (310) und den diesem zugeordneten Primärspulenblock (110) aufzunehemen.

2. Befestigungsvorrichtung nach Anspruch 1, dadurch gekennzeichnet, dass das erste (310) und das zweite Befestigungselement (320) mit jeweils einer ihrer Seiten auf dem Primärspulenblock (110) des Linearmotors (100) bzw. auf dem den Primärspulenblock aufnehmenden beweglichen Element (200) aufgesetzt sind, dass die jeweils andere Seite frei bleibt, dass das erste Befestigungselement dort ein männliches Teil (310a) und das zweite Befestigungselement (320) dort ein weibliches Teil (320a) aufweist, derart, dass das männliche Teil (310a) in das weibliche Teil (320a) eingesetzt ist und in diesem längs einer Längsachse der Anordnung gleitet (Pfeil L), die senkrecht zu der Achse der magnetischen Anziehung (Pfeile A) zwischen dem Primärblock (110) und dem Sekundärblock (120) ist, um die Befestigung des ersten (310) an dem zweiten Element (320) zu realisieren.

3. Befestigungsvorrichtung nach den Ansprüchen 1 und 2, dadurch gekennzeichnet, dass der männliche Teil (310a) des ersten Befestigungselementes (310) durch eine Gleitschiene (310a) gebildet wird, die in einer Kulisse gleitet, die den weiblichen Teil (320a) des zweiten Befestigungselementes (320) bildet.

4. Befestigungsvorrichtung nach den Ansprüchen 1 und 2, dadurch gekennzeichnet, dass das erste Befestigungselement (310) durch eine Platte gebildet wird, die die Kühlung des Primärspulenblockes (110) sicherstellt.

5. Befestigungsvorrichtung nach einem der Ansprüche 1, 2 und 3, dadurch gekennzeichnet, dass die den männlichen Teil des ersten Befestigungselementes bildende Gleitschiene (310a) ein T-Profil ist, das so dimensioniert ist, dass es in einem C-Profil aufgenommen ist, das die den weiblichen Teil (320a) des zweiten Befestigungselementes (320) bildende Kulisse ist.

6. Befestigungsvorrichtung nach Anspruch 5, dadurch gekennzeichnet, dass das T-Profil der Gleitschien (310a) und das offene C-Profil der Kulisse (320a) eine ihre Querschnitte verringernde Schräge in Gleitrichtung (Pfeil L) der Gleitschiene (310a) in der Kulisse (320a) aufweisen, dass das Gleiten des ersten in dem zweiten Befestigungselement eine dynamische Verriegelung der Anordnung aus den beiden Befestigungselementen (310 und 320) durch "konische" Klemmung des männlichen Teiles (310a) in dem weiblichen Teil (320a) bewirkt.

7. Befestigungsvorrichtung nach Anspruch 6, dadurch gekennzeichnet, dass die Schrägen des T-Profiles der Gleitschiene (310a) und des offenen C-Profiles der Kulisse (320a) in Richtung der Dickenausdehnung der Profile ausgebildet sind.

8. Befestigungsvorrichtung nach Anspruch 6, dadurch gekennzeichnet, dass die Schrägen des T-Profiles der Gleitschiene (310a) und des offenen C-Profiles der Kulisse (320a) in Richtung der Höhenausdehnung der Profile ausgebildet sind.

9. Befestigungsvorrichtung nach Anspruch 6, dadurch gekennzeichnet, dass sie einen Stiel aufweist, der abhängig von dem einem und/oder dem anderen Ende der Gleitschiene (320a) des ersten Befestigungselementes (310) ist, um das Einziehen und/oder das Herausziehen der Gleitschiene (310a) in die und/oder aus der Kulisse (320a) sicher zu stellen.

10. Befestigungsvorrichtung nach einem der vorhergehenden Ansprüche 1 bis 9, dadurch gekennzeichnet, dass die Anordnung des ersten Befestigungselementes (310) in dem zweiten Befestigungselement (320) statisch durch einen demontierbaren Flansch verriegelt ist.

## Claims

1. Attachment device (300) enabling to ensure the mounting and/or removing of a linear motor (100) of the type in which the primary coil block (110) cooperates with a moveable mechanism (200) and the secondary block (120) used as a magnet cooperates with a fixed mechanism to activate the translation displacements (arrow T) of the said moveable mechanism in relation with the said fixed mechanism, WHEREIN the aforesaid primary coil block (110) of the said linear motor (100) is associated with a first attachment element (310) wich collaborates with a second attachment element (320) complementary to the first and which, associated with the moveable mechanism (200) receiving the said primary block (100), is pre-shaped to receive in a sliding way (arrow L) the aforesaid first attachment element (310) and the aforesaid primary coil block (110) associated with it.

2. Attachment device according to claim 1, WHEREIN the first (310) and second (320) attachment elements are disposed on one of their sides, one (310) on the primary coil block (110) of the linear motor (100) and the other (320) on the moveable mechanism (200) receiving this coil block and are fitted with on their free side, a male side (310a) for the first attachment element (310) and a female side (320a) for the second attachment element (320) so that the male side (310a) comes to fit by sliding (arrow L) in the female side (320a) along a longitudinal assembly axis perpendicular to the magnetic attraction axis (arrows A) between the two primary (110) and secondary (120) blocks to enable the attachment of the first element (310) to the second element (320).

3. Attachment device according to claims 1 and 2, WHEREIN the male side (310a) of the aforesaid first attachment element (310) is constituted by a slide block (310a) able to slide (arrow L) in a slide (320a) constituting the female side of the aforesaid second attachment element (320).

4. Attachment device according to claims 1 and 2, WHEREIN the aforesaid first attachment element (310) is made of a plate ensuring the cooling of the aforesaid primary coil block (110).

5. Attachment device according to claims 1, 2 and 3, WHEREIN the section of the slide block (310a) making up the male side of the first attachment element (310) adopts a T-shape profile of the right size to move in a C-shape profile taken by the slide making up the female side (320a) of the aforesaid second attachment element (320).

6. Attachment device according to claim 5, WHEREIN the T-shape profile of the aforesaid slide block (310a) and the open C-shape profile of the aforesaid slide (320a) adopt a slope reducing their sections in the sliding way (arrow L) of the slide block (310a) in the slide (320a) so that the sliding of the first one in the second one allows a dynamic locking of the assembly of the two attachment elements (310 and 320) by "conical" tightening of the male side (310a) to the female side (320a).

7. Attachment device according to claim 6, WHEREIN the slopes of the T-shape profile of the aforesaid slide block (310a) and of the open C-shape profile of the aforesaid slide (320a) are shaped in the way of the thickness of the said profiles.

8. Attachment device according to claim 6, WHEREIN the slopes of the T-shaped profile of the aforesaid slide block (310a) and of the open C-shape profile of the aforesaid slide (320a) are shaped in the direction of the height of the said profiles.

9. Attachment device according to claim 6, WHEREIN it comprises a rod capable of being subjected to one and/or other ends of the aforesaid slide block (310a) of the first attachment element (310) so as to ensure the pulling in and/or pushing out of the slide block (310a) in and/or out of the slide (320a).

10. Attachment device according to any of the claims 1 to 9 taken together, WHEREIN the assembly of the first attachment element (310) in the second attachment element (320) is locked in a static way via a removeable clamping means.
